# EUROPEAN PATENT SPECIFICATION

(11) **EP 3 725 719 B1**
(45) Date of publication and mention of the grant of the patent: **28.02.2024**
(21) Application number: 18889494.3
(22) Date of filing: 28.11.2018
(51) Int. Cl.: B65H 75/48, B65H 75/44, B60L 53/18, B60L 53/80, H02G 11/02

(54) **CABLE COLLECTION DEVICE FOR BATTERY CHARGING AND REPLACEMENT STATION AND BATTERY CHARGING AND REPLACEMENT STATION**
KABELEINZIEHVORRICHTUNG FÜR BATTERIELADE- UND WECHSELSTATION UND BATTERIELADE- UND WECHSELSTATION
DISPOSITIF DE COLLECTE DE CÂBLE POUR STATION DE CHARGE ET DE REMPLACEMENT DE BATTERIE ET STATION DE CHARGE ET DE REMPLACEMENT DE BATTERIE

(30) Priority: 12.12.2017 CN 201721729795 U
(43) Date of publication of application: 21.10.2020
(73) Proprietor: NIO (Anhui) Holding Co., Ltd., Hefei City, Anhui Province (CN)
(72) Inventor: ZHOU, Xiaohong, Anting, Jiading, Shanghai (CN); HAO, Zhanduo, Anting, Jiading, Shanghai (CN)
(74) Representative: Vossius & Partner Patentanwälte Rechtsanwälte mbB
(86) International application number: PCT/CN2018/117859
(87) International publication number: WO 2019/114548

(56) References cited:
- CN-A- 104 627 743
- CN-A- 105 752 765
- CN-A- 107 265 197
- CN-U- 201 990 332
- CN-Y- 2 338 321
- CN-Y- 2 932 739
- FR-A1- 2 512 287
- JP-A- 2008 024 400
- JP-A- 2015 182 838

## Description

### Technical Field

The invention relates to the technical field of battery charging and swapping, and in particular to a take-up device for a battery charging and swapping station, and a battery charging and swapping station.

### Background Art

With the popularization of new energy vehicles, how to effectively provide rapid and effective energy replenishment for vehicles with insufficient energy has become a very concerned problem for vehicle owners and major manufacturers. Taking electric vehicles as an example, the current mainstream electric energy replenishment solutions include a charging solution and a battery swapping solution. Compared with the charging solution, the battery swapping solution can swap a traction battery in a very short time and does not significantly affect the service life of the traction battery, and is therefore one of the main development directions of electric energy replenishment. The battery swapping solution is generally completed in a battery charging and swapping station. The battery charging and swapping station is internally provided with a battery swap platform for swapping batteries for electric vehicles, a battery compartment for storing batteries, and a battery swap robot, such as a rail guided vehicle (RGV), for carrying batteries between the battery compartment and the battery swap platform. The battery swap robot completes the action of swapping the battery for the electric vehicle parked on the battery swap platform by reciprocating on rails laid in advance between the battery compartment and the battery swap platform.

As the core device in the battery swap process, the battery swap robot needs to complete different battery swap actions such as linear motion, lifting/lowering motion, and rotation motion multiple times in one complete battery swap process. Since the above actions are completed based on different drive mechanisms, different types and kinds of cables are mounted on the battery swap robot. In industrial applications, cable routing and traction are usually implemented using drag chains. However, for the battery swap robot, due to many complicated battery swap actions, the use of drag chains cannot solve the cable routing problem of the battery swap robot due to the complicated actions, and frequent changes in the length of the cable are also likely to cause damage to the cable by stretching/squeezing same, leading to potential safety hazards.

JP 2015 182838 A discloses a take-up device according to the preamble of claim 1.

Accordingly, there is a need in the art for a new take-up device to solve the above problems.

### Summary of the Invention

In order to solve the above problems in the prior art, that is, to solve the problem of the cables being likely to be damaged due to the use of drag chains for the routing and traction of the cables of the existing battery swap robots, the invention provides a take-up device for a battery charging and swapping station according to claim 1. The take-up device comprises: a spindle divided into a first section and a second section; and a take-up portion provided at the first section of the spindle and configured to be rotatable relative to the spindle.

In the solution of the take-up device for a battery charging and swapping station, the battery charging and swapping station comprises a power distribution cabinet, a battery swap robot, and at least one cable leading from the power distribution cabinet to the battery swap robot, wherein the take-up device further comprises a sleeve wound around the take-up portion and/or the second section of the spindle, two ends of the sleeve are respectively connected to the power distribution cabinet and the battery swap robot, and the sleeve is configured to allow the at least one cable to pass therethrough.

In the above preferred technical solution of the take-up device for a battery charging and swapping station, the sleeve has a total length less than that of the cable.

In the above preferred technical solution of the take-up device for a battery charging and swapping station, the take-up portion comprises a first cover plate, a second cover plate, and a cylindrical structure provided between the first cover plate and the second cover plate.

In the above preferred technical solution of the take-up device for a battery charging and swapping station, the second cover plate is provided with at least one threading hole, the sleeve passes through the threading hole and is wound around the cylindrical structure and the second section of the spindle, respectively, and a direction in which the sleeve is wound around the cylindrical structure is opposite to a direction in which the sleeve is wound around the second section of the spindle.

In the above preferred technical solution of the take-up device for a battery charging and swapping station, a length by which the sleeve is wound around the cylindrical structure is not less than an effective take-up/pay-off length of the sleeve; and/or a length by which the sleeve is wound around the second section of the spindle is not less than the effective take-up/pay-off length of the sleeve.

In the above preferred technical solution of the take-up device for a battery charging and swapping station, the take-up device further comprises a restoring member configured to enable, after the take-up portion rotates relative to the spindle, the take-up portion to rotate back in a reversed direction relative to the spindle.

In the above preferred technical solution of the take-up device for a battery charging and swapping station, the restoring member is a coil spring provided inside the cylindrical structure, one end of the coil spring is connected to the spindle, and the other end of the coil spring is connected to the cylindrical structure.

In the above preferred technical solution of the take-up device for a battery charging and swapping station, the take-up device further comprises a mounting bottom plate connected to the second section of the spindle, and the take-up device is mounted at a mounting position inside the battery charging and swapping station via the mounting bottom plate.

The invention further provides a battery charging and swapping station, comprising a take-up device for a battery charging and swapping station according to any one of the above solutions, wherein one end of the at least one cable is connected to the power distribution cabinet, the other end of the at least one cable is connected to the battery swap robot, and the at least one cable passes through the sleeve of the take-up device.

In the above preferred technical solution of the battery charging and swapping station, the battery charging and swapping station further comprises a cable guide device configured to be able to change the orientation of the at least one cable.

It can be understood by those skilled in the art that in a preferred technical solution of the invention, a take-up device for a battery charging and swapping station comprises a spindle, a take-up portion, a sleeve and a restoring member. The spindle is divided into a first section and a second section. The take-up portion is provided at the first section and is rotatable relative to the spindle. The sleeve is wound around the take-up portion and/or the second section of the spindle. The sleeve is configured to allow a cable to pass therethrough, and the sleeve has a total length less than that of the cable. The restoring member enables, after the take-up portion rotates relative to the spindle, the take-up portion to rotate in a reversed direction relative to the spindle. In the battery swap process, the battery swap robot pulls the sleeve to stress the sleeve instead of the cable. The invention can effectively protect the cable on the basis of achieving rational routing and traction, and prolong the service life of the cable and improve the safety of the cable. In addition, the take-up device has a simple structure and is easy to implement, and is suitable for large-scale promotion.

### Brief Description of the Drawings

A take-up device for a battery charging and swapping station, and a battery charging and swapping station of the invention will be described below with reference to the accompanying drawings and in conjunction with a battery charging and swapping station with the battery swap being performed at the bottom thereof. In the accompanying drawings:
Fig. 1 is a schematic structural view of a take-up device for a battery charging and swapping station of the invention;
Fig. 2 is a schematic structural view of the take-up device for a battery charging and swapping station of the invention with a sleeve being removed;
Fig. 3 is a cross-sectional view of the take-up device for a battery charging and swapping station of the invention;
Fig. 4 is a schematic top view of the take-up device for a battery charging and swapping station of the invention with a first cover plate being removed;
Fig. 5 is a schematic view of the structural layout of a battery charging and swapping station provided with a take-up device of the invention;
Fig. 6 is a schematic structural view of a vertical cable guide device of the invention; and
Fig. 7 is a schematic structural view of a horizontal cable guide device of the invention.

### List of reference numerals

1. Take-up device; 11. Mounting bottom plate; 12. Spindle; 121. First section; 122. Second section; 13. Take-up portion; 131. First cover plate; 132. Second cover plate; 133. Cylindrical structure; 134. Threading hole; 14. Sleeve; 141. First end of a nylon tube; 142. Second end of the nylon tube; 15. Restoring member; 16. Bearing. 2. Power distribution cabinet; 3. Battery swap robot; 4. Vertical cable guide device; 5. Horizontal cable guide device; 6. Battery swap platform; 7. Rail; 8. Rotating platform.

### Detailed Description of Embodiments

Preferred embodiments of the invention are described below with reference to the accompanying drawings. It should be understood by those skilled in the art that these embodiments are only for explaining the invention and are not intended to limit the scope of protection of the invention. For example, although the numbers of threading holes in a first cover plate and a second cover plate in the accompanying drawings are both eight, the numerical relationship is not inalterable and can be modified by those skilled in the art according to requirements so as to adapt to a specific scenario.

It should be noted that in the description of the invention, the terms, such as "centre", "upper", "lower", "left", "right", "vertical", "horizontal", "inner" and "outer", that indicate directions or positional relationships are based on the directions or positional relationships shown in the drawings only for convenience of description, and do not indicate or imply that the device or element must have a specific orientation, be constructed and operated in a specific orientation, and therefore cannot be understood as limitation to the invention. In addition, the terms "first", "second" and "third" are for descriptive purposes only and should not be construed as indicating or implying relative importance.

In addition, it should also be noted that, in the description of the invention, the terms "mount", "engage" and "connect" should be interpreted in a broad sense unless explicitly defined and limited otherwise, which, for example, can mean a fixed connection, a detachable connection or an integral connection; can mean a mechanical connection or an electrical connection; and can mean a direct connection, an indirect connection by means of an intermediary, or internal communication between two elements. For a person skilled in the art, the specific meaning of the above terms in the invention can be interpreted according to the specific situation.

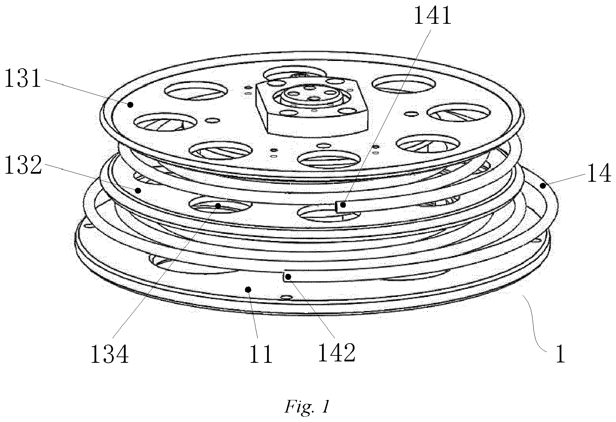

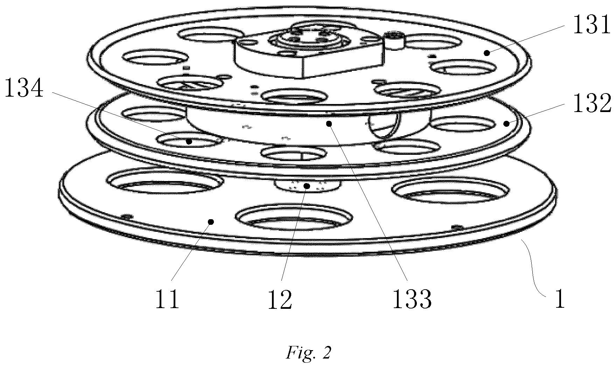

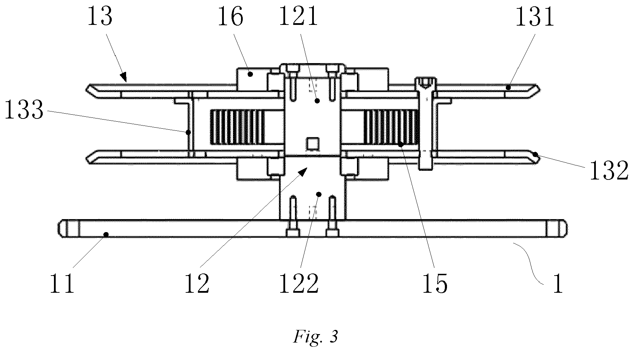

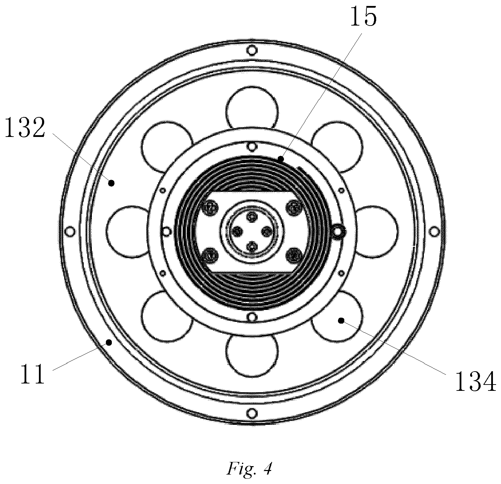

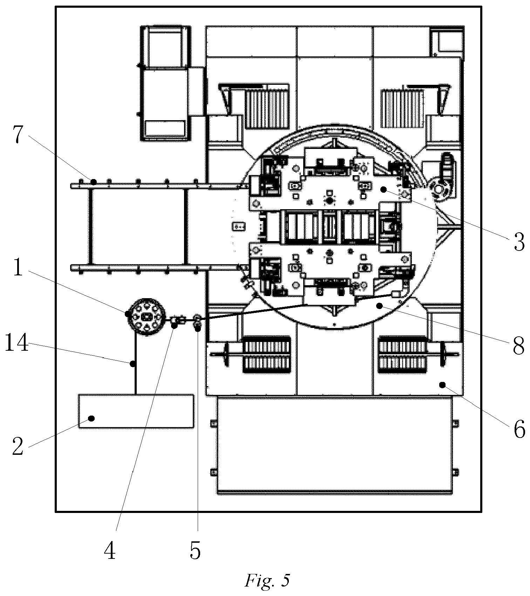

Reference is first made to Figs. 1 to 4, wherein Fig. 1 is a schematic structural view of a take-up device for a battery charging and swapping station of the invention; Fig. 2 is a schematic structural view of the take-up device for a battery charging and swapping station of the invention with a sleeve being removed; Fig. 3 is a cross-sectional view of the take-up device for a battery charging and swapping station of the invention; Fig. 4 is a schematic top view of the take-up device for a battery charging and swapping station of the invention with a first cover plate being removed; and Fig. 5 is a schematic view of the structural layout of a battery charging and swapping station provided with a take-up device of the invention.

As shown in Figs. 1 and 4, to solve the problem of the cables being likely to be damaged due to the use of drag chains for the routing and traction of the cables of the existing battery swap robots 3, the invention provides a take-up device 1 for a battery charging and swapping station (hereinafter referred to as the take-up device 1). The battery charging and swapping station comprises a power distribution cabinet 2, a battery swap robot 3, and at least one cable leading from the power distribution cabinet 2 to the battery swap robot 3 (for the convenience of description below, one cable is used for description, but this is not meant to limit the invention). The take-up device 1 mainly comprises a mounting bottom plate 11, a spindle 12, a take-up portion 13, a sleeve 14, and a restoring member 15. Referring to Fig. 3, the spindle 12 has a shoulder (not labelled in the figure) which divides the spindle 12 into a first section 121 (i.e., the upper half in Fig. 3) and a second section 122 (i.e., the lower half in Fig. 3). The take-up portion 13 further comprises a first cover plate 131, a second cover plate 132, and a cylindrical structure 133 provided between the first cover plate 131 and the second cover plate 132. The entire take-up portion 13 is provided at the first section 121 of the spindle 12 and is configured to be rotatable relative to the spindle 12. The mounting bottom plate 11 is connected to an end portion of the second section 122 of the spindle 12, and is used to fix the take-up device 1 at a mounting position inside the battery charging and swapping station. Referring to Fig. 1, the sleeve 14 is wound around the take-up portion 13 and/or the second section 122 of the spindle 12, and is configured to allow the cable to pass therethrough. The restoring member 15 is configured to enable, after the take-up portion 13 rotates relative to the spindle 12, the take-up portion 13 to rotate in a reversed direction relative to the spindle 12.

It should be noted that the mounting position may be any position in the battery charging and swapping station, as long as the position can meet the rational take-up conditions. For example, the mounting position may be the ground between the power distribution cabinet 2 and the battery swap robot 3 in the battery charging and swapping station shown in Fig. 5, or a wall in the battery charging and swapping station, or a mounting bracket provided on the ground or on the wall.

After the take-up device 1 is mounted at any of the above positions via the mounting bottom plate 11, the cable led from the power distribution cabinet 2 can be connected to the battery swap robot 3 after passing through the sleeve 14 wound around the take-up portion 13 and/or the second section 122 of the spindle 12. When performing the battery swap, the battery swap robot 3 pulls the sleeve 14, and the sleeve 14 drives the take-up portion 13 to rotate relative to the spindle 12 so as to pay-off the cable. After the pulling force is removed, the restoring member 15 enables the take-up portion 13 to rotate in a reversed direction relative to the spindle 12, so as to take-up the cable.

As can be seen from the above description, in the battery swap process, by means of the arrangement in which the battery swap robot 3 pulls the sleeve 14 to stress the sleeve 14 instead of the cable, the invention can realize the routing and traction of the cable by the take-up device 1, such that the cable is not stressed in the battery swap process, protecting the cable to the greatest extent. The provision of the restoring member 15 enables the sleeve 14 to be in a stretched state during the movement of the battery swap robot 3, avoiding the situation that the cable is likely to be damaged caused by stretching/squeezing same.

Further referring to Figs. 1 to 4, preferably, the take-up portion 13 is connected to the spindle 12 via two bearings 16, and the first cover plate 131 and the second cover plate 132 are fixedly connected to the cylindrical structure 133 via screws. The sleeve 14 is preferably a nylon tube with an excellent tensile property. Two ends of the nylon tube are respectively connected to the power distribution cabinet 2 and the battery swap robot 3, and the total length of the nylon tube is less than the total length of the cable. The restoring member 15 is preferably a coil spring. The coil spring is provided inside the cylindrical structure 133, with one end being fixedly connected to the cylindrical structure 133 and the other end being fixedly connected to the spindle 12.

The first cover plate 131 and the second cover plate 132 are also respectively provided with eight threading holes 134. The nylon tube passes through one of the threading holes 134 in the second cover plate 132 and is then wound around the cylindrical structure 133 and the second section 122 of the spindle 12, respectively. Preferably, a direction in which the nylon tube is wound around the cylindrical structure 133 is opposite to a direction in which the nylon tube is wound around the second section 122 of the spindle 12; and a length by which the nylon tube is wound around the cylindrical structure 133 is not less than an effective take-up/pay-off length of the nylon tube, and a length by which the nylon tube is wound around the second section 122 of the spindle 12 is not less than the effective take-up/pay-off length of the nylon tube. More preferably, the length by which the nylon tube is wound around the cylindrical structure 133 may be slightly larger than the effective take-up/pay-off length of the nylon tube, and the length by which the nylon tube is wound around the second section 122 of the spindle 12 may be set to be the same as the length by which the nylon tube is wound around the cylindrical structure 133, that is, slightly larger than the effective take-up/pay-off length of the nylon tube.

It should be explained that the effective take-up/pay-off length may be the length by which the nylon tube is wound around the cylindrical structure 133 that allows the battery swap robot 3 to just reach an extreme position. That is to say, in the case that the length by which the nylon tube is wound around the cylindrical structure 133 is exactly equal to the effective length of the nylon tube, when the battery swap robot 3 reaches the state farthest from the take-up device 1, the part of the nylon tube wound around the cylindrical structure 133 is just fully expanded.

According to the orientation shown in Fig. 1, in a possible embodiment, a first end 141 of the nylon tube is connected to the battery swap robot 3, a second end 142 of the nylon tube is connected to the power distribution cabinet 2, and the routing direction of the nylon tube from the battery swap robot to the power distribution cabinet is: starting from the first end 141 of the nylon tube, the nylon tube being first wound around the cylindrical structure 133 in a counter-clockwise direction (referring to Fig. 3), passing through the threading hole 134, then being wound around the second section 122 of the spindle 12 in a clockwise direction (referring to Fig. 3), and finally reaching the second end 142 of the nylon tube. That is to say, regardless of the top view from the top of the take-up device 1 or the bottom view from the bottom of the take-up device, the direction in which the nylon tube is wound around the cylindrical structure 133 is opposite to the direction in which the nylon tube is wound around the second section 122 of the spindle 12.

In the above preferred embodiment, by selecting a nylon tube with an excellent tensile property as the sleeve 14, and by setting the total length of the nylon tube to be less than the total length of the cable, the nylon tube is stretched and stressed instead of the cable during the reciprocating movement of the battery swap robot 3, and the cable is always in an unstressed state, thereby effectively protecting the cable and preventing the cable from being damaged by stretching or squeezing same. By means of the setting in which the length by which the nylon tube is wound around the cylindrical structure 133 is slightly larger than the effective take-up/pay-off length of the nylon tube, it is possible to prevent the nylon tube and the cable from being broken due to the too short length by which the nylon tube is wound around the cylindrical structure 133, thereby improving the operational stability of the battery charging and swapping station. By means of the setting in which the length by which the nylon tube is wound around the second section 122 of the spindle 12 is the same as the length by which the nylon tube is wound around the cylindrical structure 133 in the opposite direction, it is possible to pay-off/take-up the nylon tube wound around the second section 122 of the spindle 12 correspondingly when the take-up portion 13 is rotated to pay-off/take-up the nylon tube. This arrangement can make the nylon tube between the power distribution cabinet 2 and the take-up device 1 in a good tension state while keeping the take-up portion 13 in good rotation, thereby ensuring the good traction and wiring of the cable between the power distribution cabinet 2 and the take-up device 1.

Of course, those skilled in the art can understand that the above embodiments are only preferred solutions of the invention, and adjustments can be made which fall within the scope of protection of the invention, which is defined by the appended claims. As an example, although the take-up portion 13 in this embodiment comprises the first cover plate 131, the second cover plate 132, and the cylindrical structure 133, in fact, the take-up portion 13 may also take another form, such as an arrangement in which one of the first cover plate 131 and the second cover plate 132 is formed integrally with the cylindrical structure 133, or an arrangement in which the first cover plate 131 and the second cover plate 132 are respectively provided with matching cylindrical structures 133 and are snap-fitted together. As an example, the sleeve 14 may also use another material with a better tensile property, such as a rubber hose, a spring hose, bellows or a steel wire hose. As an example, instead of the coil spring, the restoring member 15 may also take another form, such as a torsion spring, or even an arrangement in which a drive motor drives, via gears, the cylindrical structure 133 to rotate forward and backward, as long as this form enables the take-up portion 13 to rotate back automatically. As a further example, the numbers of threading holes 134 in the first cover plate 131 and the second cover plate 132 can be set arbitrarily.

As a still further example, although the sleeve 14 in this embodiment is described in conjunction with the case where the sleeve passes through one of the threading holes 134 in the second cover plate 132 and is then wound around the cylindrical structure 133 and the second section 122 of the spindle 12, respectively, those skilled in the art can understand that the sleeve 14 may of course only be wound around one of the cylindrical structure 133 and the second section 122 of the spindle 12, for example, if the sleeve is only wound around the cylindrical structure 133, one end of the sleeve 14 is connected to the battery swap robot 3, and the other end thereof is fixed to the cylindrical structure 133, then the sleeve 14 only protects the cable between the take-up device 1 and the battery swap robot 3. Similarly, the sleeve 14 may also be only wound around the second section 122 of the spindle 12, then the sleeve 14 only protects the cable between the take-up device 1 and the power distribution cabinet 2.

As a yet further example, after passing through the threading hole 134, the sleeve 14 may be wound around the cylindrical structure 133 and the second section of the spindle 12 in the same winding direction, and at this time, it is necessary to leave a certain margin for the sleeve 14 wound around the second section 122 of the spindle 12 to ensure that when the cylindrical structure 133 rotates, the sleeve 14 will not be damaged caused by pulling same during the rotation of the cylindrical structure 133 because the margin is set to be too small or there is no margin. By way of example, an interference fit may be used between the sleeve 14 and the threading hole 134, and the sleeve 14 is then divided into two sections: one section passes though the threading hole 134, is wound around the cylindrical structure 133, and is then connected to the battery swap robot 3. This section of the sleeve 14 may be set to be always in a stretched state to protect the cable and prevent the cable from being stretched or squeezed and thus damaged during the movement of the battery swap robot 3. The other section passes though the threading hole 134, is wound around the second section 122 of the spindle 12, and is then connected to the power distribution cabinet 2. Since the cable in this section does not need to be moved frequently, only the connection stability needs to be ensured. Therefore, a certain margin is provided at the place where the sleeve 14 is wound around the second section 122 of the spindle 12 to ensure that the sleeve 14 is not damaged caused by pulling same during the rotation of the cylindrical structure 133.

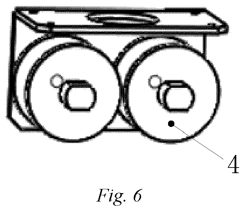

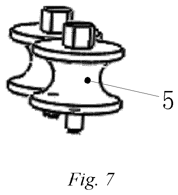

A battery charging and swapping station of the invention will be described below with reference to Figs. 5 to 7. Fig. 6 is a schematic structural view of a vertical cable guide device of the invention; and Fig. 7 is a schematic structural view of a horizontal cable guide device of the invention. As shown in Figs. 5 to 7, the invention also provides a battery charging and swapping station, comprising a power distribution cabinet 2, a battery swap robot 3, a battery swap platform 6, rails 7, a rotating platform 8, and at least one cable leading from the power distribution cabinet 2 to the battery swap robot 3. The battery swap robot 3 can move horizontally on the rails 7, and rotate under the driving of the rotating platform 8. One end of the cable is connected to the power distribution cabinet 2 and the other end thereof is connected to the battery swap robot 3. The battery charging and swapping station further comprises a take-up device 1 for a battery charging and swapping station as described above, and the cable passes through the sleeve 14 of the take-up device 1.

As mentioned above, in the battery swap process, the battery swap robot 3 pulls the sleeve 14 to stress the sleeve 14 instead of the cable, so that the invention can realize the routing and traction of the cable by the take-up device 1, and protect the cable to the greatest extent. The provision of the restoring member 15 enables the sleeve 14 to be in a stretched state during the movement of the battery swap robot 3, avoiding the situation that the cable is likely to be damaged caused by stretching/squeezing same.

Further, the battery charging and swapping station further comprises a cable guide device configured to be able to change the orientation of the at least one cable. Preferably, the cable guide device may comprise a vertical cable guide device 4 and a horizontal cable guide device 5, wherein the vertical cable guide device 4 can change the orientation of the cable in a vertical plane, and the horizontal cable guide device 5 can change the orientation of the cable in a horizontal plane. As an example, the cable guide device may be implemented by means of fixed pulleys, pulley bearings or copper sleeves, etc., and the horizontal cable guide device 5 and the vertical cable guide device 4 may be implemented using the same cable guide device in different mounting directions, in order to save on costs and improve the degree of standardization of parts.

The arrangement of the horizontal cable guide device 5 and the vertical cable guide device 4 enables the battery charging and swapping station of the invention to route the cable according to any layout requirements. In addition, the take-up device 1 has the characteristics of having a small structure and being convenient to place, which not only ensures the flexibility of wiring, but also can be mounted, in a hidden manner, inside an electrical cabinet or under a mounting face of the battery charging and swapping station according to the actual situation. In this way, the layout in the battery charging and swapping station is more rational and visually attractive.

Finally, it should be noted that the method for mounting the take-up device 1 in the battery charging and swapping station is not unique. Under the condition of satisfying rational take-up, the take-up device 1 may be mounted horizontally or vertically.

Heretofore, the technical solutions of the invention have been described with reference to the preferred embodiments shown in the accompanying drawings; however, those skilled in the art can readily understand that the scope of protection of the invention is obviously not limited to these particular embodiments. Those skilled in the art can make changes or substitutions to the related technical features without departing from the scope of protection of the invention, which is defined by the appended claims.

## Claims

1. A take-up device (1) for a battery charging and swapping station, wherein the take-up device (1) comprises:
a spindle (12) divided into a first section (121) and a second section (122);
a take-up portion (13) provided at the first section (121) of the spindle (12) and configured to be rotatable relative to the spindle (12); and
**characterized by** further comprising
a sleeve (14) wound around the take-up portion (13) and/or the second section (122) of the spindle (12), two ends of the sleeve being suitable to be respectively connected to a power distribution cabinet and a battery swap robot of the battery charging and swapping station, and the sleeve (14) being configured to allow at least one cable of the battery charging and swapping station, leading from the power distribution cabinet to the battery swap robot, to pass therethrough.

2. The take-up device (1) for a battery charging and swapping station according to claim 1, **characterized in that** the sleeve (14) has a total length less than that of the at least one cable.

3. The take-up device (1) for a battery charging and swapping station according to claim 1, **characterized in that** the take-up portion (13) comprises a first cover plate (131), a second cover plate (132), and a cylindrical structure (133) provided between the first cover plate (131) and the second cover plate (132).

4. The take-up device (1) for a battery charging and swapping station according to claim 3, **characterized in that** the second cover plate (132) is provided with at least one threading hole (134), the sleeve (14) passing through the threading hole (134) and being wound around the cylindrical structure (133) and the second section (122) of the spindle (12), respectively, and a direction in which the sleeve (14) is wound around the cylindrical structure (133) being opposite to a direction in which the sleeve (14) is wound around the second section (122) of the spindle (12).

5. The take-up device (1) for a battery charging and swapping station according to claim 4, **characterized in that** a length by which the sleeve (14) is wound around the cylindrical structure (133) is not less than an effective take-up/pay-off length of the sleeve (14); and/or
a length by which the sleeve (14) is wound around the second section (122) of the spindle (12) is not less than the effective take-up/pay-off length of the sleeve (14).

6. The take-up device (1) for a battery charging and swapping station according to any one of claims 3 to 5, **characterized in that** the take-up device (1) further comprises a restoring member (15) configured to enable, after the take-up portion (13) rotates relative to the spindle (12), the take-up portion (13) to rotate back in a reversed direction relative to the spindle (12).

7. The take-up device (1) for a battery charging and swapping station according to claim 6, **characterized in that** the restoring member (15) is a coil spring provided inside the cylindrical structure (133), one end of the coil spring (15) being connected to the spindle (12), and the other end of the coil spring (15) being connected to the cylindrical structure (133).

8. The take-up device (1) for a battery charging and swapping station according to claim 1, **characterized in that** the take-up device (1) further comprises a mounting bottom plate (11) connected to the second section (122) of the spindle (12), and the take-up device (1) is mounted at a mounting position inside the battery charging and swapping station via the mounting bottom plate (11).

9. A battery charging and swapping station, **characterized by** comprising:
a power distribution cabinet (2);
a battery swap robot (3);
at least one cable leading from the power distribution cabinet (2) to the battery swap robot (3); and
a take-up device (1) for a battery charging and swapping station according to any one of claims 1-8,
wherein one end of the at least one cable is connected to the power distribution cabinet (2), the other end of the at least one cable is connected to the battery swap robot (3), and the at least one cable passes through the sleeve (14) of the take-up device (1).

10. The battery charging and swapping station according to claim 9, **characterized by** further comprising a cable guide device (4, 5) configured to be able to change the orientation of the at least one cable.

## Patentansprüche

1. Aufwickelvorrichtung (1) für eine Batterielade- und -wechselstation, wobei die Aufwickelvorrichtung (1) umfasst:
eine Spindel (12), die in einen ersten Abschnitt (121) und einen zweiten Abschnitt (122) unterteilt ist;
einen Aufwickelteil (13), der an dem ersten Abschnitt (121) der Spindel (12) bereitgestellt und dazu ausgelegt ist, in Relation zu der Spindel (12) drehbar zu sein; und
**dadurch gekennzeichnet, dass** sie ferner umfasst
ein Schlauch (14), der um den Aufwickelteil (13) und/oder den zweiten Abschnitt (122) der Spindel (12) gewickelt ist, wobei zwei Enden des Schlauchs dazu geeignet sind, mit einem Stromverteilerschrank bzw. einem Batteriewechselroboter der Batterielade- und -wechselstation verbunden zu sein, und wobei der Schlauch (14) dazu ausgelegt ist, zu ermöglichen, dass mindestens ein Kabel der Batterielade- und -wechselstation, das von dem Stromverteilerschrank zu dem Batteriewechselroboter führt, dort hindurch verläuft.

2. Aufwickelvorrichtung (1) für eine Batterielade- und -wechselstation nach Anspruch 1, **dadurch gekennzeichnet, dass** der Schlauch (14) eine Gesamtlänge aufweist, die kleiner als die des mindestens einen Kabels ist.

3. Aufwickelvorrichtung (1) für eine Batterielade- und -wechselstation nach Anspruch 1, **dadurch gekennzeichnet, dass** der Aufwickelteil (13) eine erste Abdeckplatte (131), eine zweite Abdeckplatte (132) und eine zylindrische Struktur (133) umfasst, die zwischen der ersten Abdeckplatte (131) und der zweiten Abdeckplatte (132) bereitgestellt ist.

4. Aufwickelvorrichtung (1) für eine Batterielade- und -wechselstation nach Anspruch 3, **dadurch gekennzeichnet, dass** die zweite Abdeckplatte (132) mit mindestens einem Gewindeloch (134) versehen ist, wobei der Schlauch (14) durch das Gewindeloch (134) verläuft und um die zylindrische Struktur (133) bzw. den zweiten Abschnitt (122) der Spindel (12) gewickelt ist, und wobei eine Richtung, in der der Schlauch (14) um die zylindrische Struktur (133) gewickelt ist, entgegengesetzt zu einer Richtung ist, in der der Schlauch (14) um den zweiten Abschnitt (122) der Spindel (12) gewickelt ist.

5. Aufwickelvorrichtung (1) für eine Batterielade- und -wechselstation nach Anspruch 4, **dadurch gekennzeichnet, dass** eine Länge, um die der Schlauch (14) um die zylindrische Struktur (133) gewickelt ist, nicht kleiner als eine Aufwickel-/Abwickelnutzlänge des Schlauchs (14) ist; und/oder
wobei eine Länge, um die der Schlauch (14) um den zweiten Abschnitt (122) der Spindel (12) gewickelt ist, nicht kleiner als die Aufwickel-/ Abwickelnutzlänge des Schlauchs (14) ist.

6. Aufwickelvorrichtung (1) für eine Batterielade- und -wechselstation nach einem der Ansprüche 3 bis 5, **dadurch gekennzeichnet, dass** die Aufwickelvorrichtung (1) ferner ein Rückstellelement (15) umfasst, das dazu ausgelegt ist, nachdem sich der Aufwickelteil (13) in Relation zu der Spindel (12) dreht, zu ermöglichen, dass sich der Aufwickelteil (13) in einer umgekehrten Richtung in Relation zu der Spindel (12) zurückdreht.

7. Aufwickelvorrichtung (1) für eine Batterielade- und -wechselstation nach Anspruch 6, **dadurch gekennzeichnet, dass** das Rückstellelement (15) eine Schraubenfeder ist, die in der zylindrischen Struktur (133) bereitgestellt ist, wobei ein Ende der Schraubenfeder (15) mit der Spindel (12) verbunden ist und das andere Ende der Schraubenfeder (15) mit der zylindrischen Struktur (133) verbunden ist.

8. Aufwickelvorrichtung (1) für eine Batterielade- und -wechselstation nach Anspruch 1, **dadurch gekennzeichnet, dass** die Aufwickelvorrichtung (1) ferner eine Montagebodenplatte (11) umfasst, die mit dem zweiten Abschnitt (122) der Spindel (12) verbunden ist, und wobei die Aufwickelvorrichtung (1) an einer Montageposition in der Batterielade- und -wechselstation mittels der Montagebodenplatte (11) montiert ist.

9. Batterielade- und -wechselstation, **dadurch gekennzeichnet, dass** sie umfasst:
einen Stromverteilerschrank (2);
einen Batteriewechselroboter (3);
mindestens ein Kabel, das von dem Stromverteilerschrank (2) zu dem Batteriewechselroboter (3) führt; und
eine Aufwickelvorrichtung (1) für eine Batterielade- und -wechselstation nach einem der Ansprüche 1-8,
wobei ein Ende des mindestens einen Kabels mit dem Stromverteilerschrank (2) verbunden ist, das andere Ende des mindestens einen Kabels mit dem Batteriewechselroboter (3) verbunden ist und das mindestens eine Kabel durch den Schlauch (14) der Aufwickelvorrichtung (1) verläuft.

10. Batterielade- und -wechselstation nach Anspruch 9, **dadurch gekennzeichnet, dass** sie ferner eine Kabelführungsvorrichtung (4, 5) umfasst, die dazu ausgelegt ist, in der Lage zu sein, die Ausrichtung des mindestens einen Kabels zu ändern.

## Revendications

1. Dispositif d'enroulement (1) pour une station de recharge et d'échange de batterie, dans lequel le dispositif d'enroulement (1) comprend :
une broche (12) divisée en une première section (121) et une seconde section (122) ;
une partie d'enroulement (13) prévue à la première section (121) de la broche (12) et configurée pour être rotative relativement à la broche (12) ; et
**caractérisé en ce qu'**il comprend en outre
un manchon tubulaire (14) bobiné autour de la partie d'enroulement (13) et/ou de la seconde section (122) de la broche (12), deux extrémités du manchon tubulaire étant appropriées pour être respectivement raccordées à une armoire de distribution d'énergie électrique et un robot d'échange de batterie de la station de recharge et d'échange de batterie, et le manchon tubulaire (14) étant configuré pour permettre à au moins un câble de la station de recharge et d'échange de batterie, conduisant de l'armoire de distribution d'énergie électrique au robot d'échange de batterie, de passer à travers celui-ci.

2. Dispositif d'enroulement (1) pour une station de recharge et d'échange de batterie selon la revendication 1, **caractérisé en ce que** le manchon tubulaire (14) a une longueur totale inférieure à celle de l'au moins un câble.

3. Dispositif d'enroulement (1) pour une station de recharge et d'échange de batterie selon la revendication 1, **caractérisé en ce que** la partie d'enroulement (13) comprend une première plaque couvercle (131), une seconde plaque couvercle (132), et une structure cylindrique (133) prévue entre la première plaque couvercle (131) et la seconde plaque couvercle (132).

4. Dispositif d'enroulement (1) pour une station de recharge et d'échange de batterie selon la revendication 3, **caractérisé en ce que** la seconde plaque couvercle (132) est pourvue d'au moins un trou d'enfilage (134), le manchon tubulaire (14) passant à travers le trou d'enfilage (134) et étant bobiné autour de la structure cylindrique (133) et de la seconde section (122) de la broche (12), respectivement, et une direction dans laquelle le manchon tubulaire (14) est bobiné autour de la structure cylindrique (133) étant opposée à une direction dans laquelle le manchon tubulaire (14) est bobiné autour de la seconde section (122) de la broche (12).

5. Dispositif d'enroulement (1) pour une station de recharge et d'échange de batterie selon la revendication 4, **caractérisé en ce qu'**une longueur selon laquelle le manchon tubulaire (14) est bobiné autour de la structure cylindrique (133) n'est pas inférieure à une longueur effective d'enroulement/de déroulement du manchon tubulaire (14) ; et/ou
une longueur selon laquelle le manchon tubulaire (14) est bobiné autour de la seconde section (122) de la broche (12) n'est pas inférieure à la longueur effective d'enroulement/de déroulement du manchon tubulaire (14).

6. Dispositif d'enroulement (1) pour une station de recharge et d'échange de batterie selon l'une quelconque des revendications 3 à 5, **caractérisé en ce que** le dispositif d'enroulement (1) comprend en outre un élément de rappel (15) configuré pour permettre, après que la partie d'enroulement (13) entre en rotation relativement à la broche (12), à la partie d'enroulement (13) d'entrer en rotation opposée, dans une direction inversée relativement à la broche (12).

7. Dispositif d'enroulement (1) pour une station de recharge et d'échange de batterie selon la revendication 6, **caractérisé en ce que** l'élément de rappel (15) est un ressort hélicoïdal prévu à l'intérieur de la structure cylindrique (133), une extrémité du ressort hélicoïdal (15) étant raccordée à la broche (12), et l'autre extrémité du ressort hélicoïdal (15) étant raccordée à la structure cylindrique (133).

8. Dispositif d'enroulement (1) pour une station de recharge et d'échange de batterie selon la revendication 1, **caractérisé en ce que** le dispositif d'enroulement (1) comprend en outre une plaque inférieure de montage (11) raccordée à la seconde section (122) de la broche (12), et le dispositif d'enroulement (1) est monté à une position de montage à l'intérieur de la station de recharge et d'échange de batterie par l'intermédiaire de la plaque inférieure de montage (11).

9. Station de recharge et d'échange de batterie, **caractérisée en ce qu'**elle comprend :
une armoire de distribution d'énergie électrique (2) ;
un robot d'échange de batterie (3) ;
au moins un câble, conduisant de l'armoire de distribution d'énergie électrique (2) au robot d'échange de batterie (3) ; et
un dispositif d'enroulement (1) pour une station de recharge et d'échange de batterie selon l'une quelconque des revendications 1 à 8,
dans laquelle une extrémité de l'au moins un câble est raccordée à l'armoire de distribution d'énergie électrique (2), l'autre extrémité de l'au moins un câble est raccordée au robot d'échange de batterie (3), et l'au moins un câble passe à travers le manchon tubulaire (14) du dispositif d'enroulement (1).

10. Station de recharge et d'échange de batterie selon la revendication 9, **caractérisée en ce qu'**elle comprend en outre un dispositif de guidage de câble (4, 5) configuré pour être capable de changer l'orientation de l'au moins un câble.
